# EUROPÄISCHE PATENTSCHRIFT

(11) **EP 3 362 219 B1**
(45) Veröffentlichungstag und Bekanntmachung des Hinweises auf die Patenterteilung: **31.08.2022**
(21) Anmeldenummer: 16778247.3
(22) Anmeldetag: 22.09.2016
(51) Int. Cl.: B23K 26/359, F21V 5/00, G02B 5/02, B23K 26/00

(54) **VERFAHREN ZUR HERSTELLUNG EINER STREUOPTIK**
PROCESS FOR PRODUCING A DIFFUSER OPTIC
PROCÉDÉ DE FABRICATION D'UNE DIFFUSEUR OPTIQUE

(30) Priorität: 15.10.2015 DE 102015220074; 14.01.2016 DE 102016200380
(43) Veröffentlichungstag der Anmeldung: 22.08.2018
(73) Patentinhaber: Zumtobel Lighting GmbH, 6850 Dornbirn (AT)
(72) Erfinder: ZEHETNER, Johann, 6850 Dornbirn (AT); SEYRINGER, Heinz, 6973 Höchst (AT); SCHMIDMAYR, David, 6700 Bludenz (AT)
(74) Vertreter: Kiwit, Benedikt
(86) Internationale Anmeldenummer: PCT/EP2016/072614
(87) Internationale Veröffentlichungsnummer: WO 2017/063844

(56) Entgegenhaltungen:
- US-A1- 2012 103 412
- US-B2- 7 875 414
- J. BONSE: "Femtosecond laser-induced periodic surface structures", JOURNAL OF LASER APPLICATIONS, Bd. 24, 16. Juli 2012 (2012-07-16), Seiten 042006-1-042006-7, XP002765034, ISSN: 1042-346X in der Anmeldung erwähnt
- A V Nesterov ET AL: "Influence of beam polarization on laser cutting efficiency Generation of high-power radially polarized beam On laser fusion cutting of metals Modellingthe laser fusion cutting process: I Study of melt flow dynamics and influence on quality for CO2 laser fusion cutting Influence of beam polarization", J. Phys. D: Appl. Phys, 30. Dezember 1999 (1999-12-30), Seiten 1455-1461, XP055327279, Gefunden im Internet: URL:http://iopscience.iop.org/article/10.1 088/0022-3727/32/13/304/pdf [gefunden am 2016-12-08]

## Beschreibung

Die vorliegende Erfindung betrifft ein Verfahren zur Herstellung einer Streuoptik mit Streustruktur für Leuchten.

Aus dem Stand der Technik sind grundsätzlich Leuchten und insbesondere LED-Leuchten bekannt. Je nach Aufbau und Einsatzzweck einer LED-Leuchte ist es notwendig, das von der einzelnen LED abgestrahlte Licht diffus zu streuen. Primär sollen damit Farbränder eliminiert werden. Zum Beispiel bei "tuneable-white" Lösungen, bei denen verschiedenfarbige LEDs mit unterschiedlicher Intensität betrieben werden können, dient eine solche Diffusoroptik außerdem der Farbmischung und verhindert das Entstehen farbiger Schatten.

Es ist zudem aus dem Stand der Technik bekannt, dass Oberflächen mittels Laser bearbeitet werden können, um der Oberfläche eine mehr oder weniger definierte Struktur zu verleihen. Als Beispiel seien hier Nanostrukturen auf der Oberfläche von Solarkollektoren zur breitbandigen Entspiegelung derselben genannt.

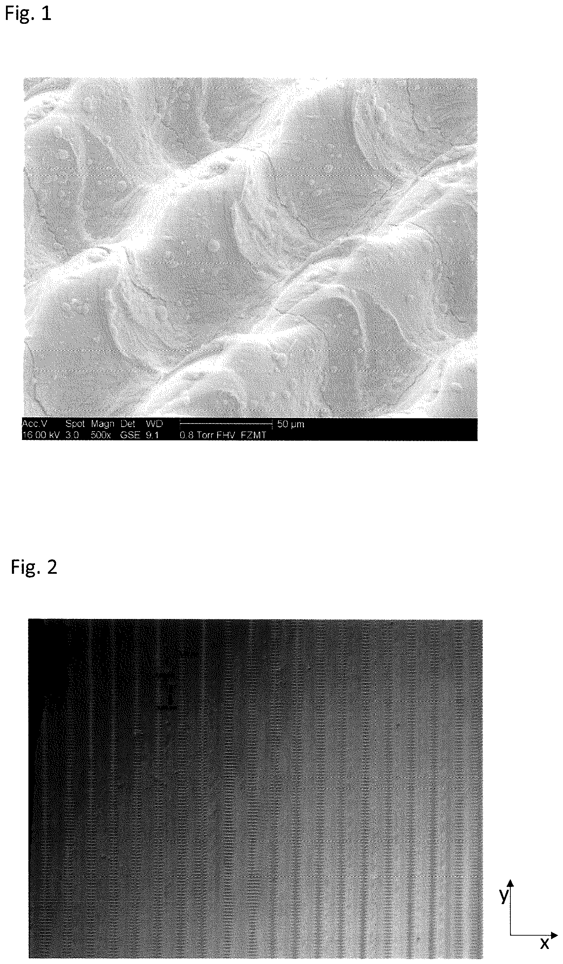

Mittels entsprechender Laserbearbeitung lassen sich leicht wellenförmige oder kuppelartige Mikrostrukturen auf der Oberfläche erzeugen, die bei Verwendung mit Leuchten ähnlich einem Beugungsgitter oder Mikrolinsenarray das Licht beugen und zu einer der geometrischen Verteilung der Mikrostrukturen konformen räumlichen Lichtverteilung führen. Verwendet man einen Nanosekundenlaser (ns-Laser) zur Ablation, erhalten diese Mikrostrukturen eine durch unregelmäßige Aufschmelzung und Spannungsrisse bedingte Oberflächenrauhigkeit, wie dies in Figur 1 dargestellt ist, und das Licht wird bei entsprechend eingebrachten Mikrostrukturen zusätzlich diffus gestreut. Das entstandene Beugungsbild wird insgesamt weicher und gleichmäßiger, es zeichnet sich jedoch das Beugungsbild der Streugeometrie noch immer merklich sichtbar ab, so dass keine ausreichend homogene Lichtverteilung erreicht werden kann.

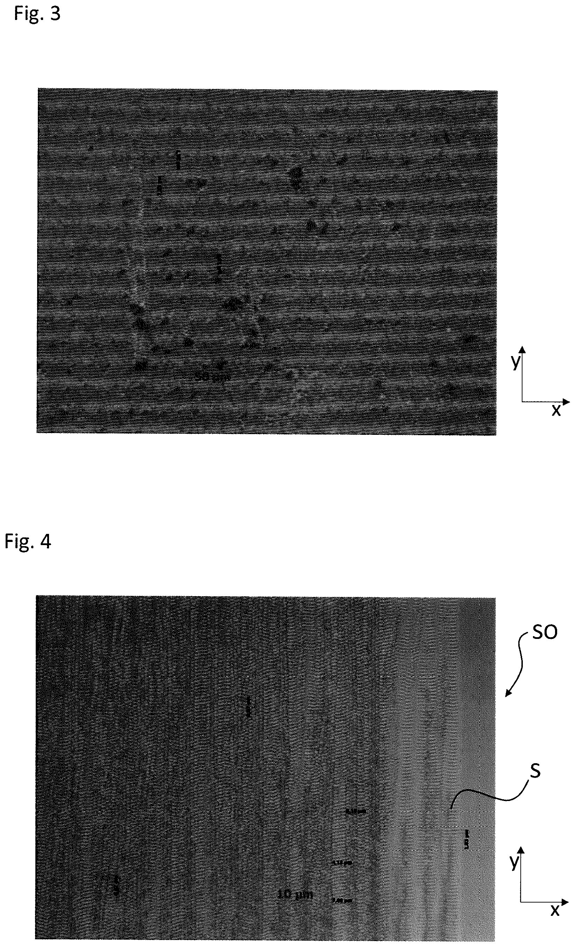

In weiteren Versuchen wurden zur Ablation ein Pikosekundenlaser (ps-Laser) und auch ein Femtosekundelaser (fs-Laser) verwendet. Bei Verwendung dieser Laser entstehen bei den eingesetzten Materialien an der Oberfläche Strukturen mit einer Dimension von einigen hundert Nanometern - also Nanostrukturen - welche in der Literatur auch als Ripple oder LIPSS (Laser Induced Periodic Surface Structures; Laser-induzierte periodische Oberflächenstruktur) bezeichnet werden. Es können sich unter bestimmten Umständen auch Ripple mit einer Periodizität von weniger als 100nm ausbilden, die in der Literatur als HSFL (high spatial frequency LIPSS) bezeichnet werden. Die Längsachsen dieser LIPSS sind bei Materialien wie Metallen und Halbleitern größtenteils quer zur Polarisationsrichtung eines linear polarisierten Lasers orientiert. Im Artikel "Femtosecond laser-induced periodic surface structures" von J. Bonse (Journal of Laser Applications; 24, 042006 (2012)) wurden für eine Reihe von Materialien die Orientierung zur Polarisation und die Dimension der Periodizität für LIPSS beschrieben. Bewegt sich der Schreibstrahl des Lasers nun parallel zur Polarisationsrichtung, so entsteht ein streifenförmiges Ripple-Muster, wie beispielsweise in Figur 2 dargestellt (Laser linear polarisiert in Y-Richtung; Scanrichtung in Y-Richtung). Bei dem streifenförmigen Ripple-Muster sind die einzelnen Ripple-Bahnen klar gegeneinander abgegrenzt. Wird der Schreibstrahl quer bzw. senkrecht zur Polarisationsrichtung, also parallel zur Ripple-Richtung, geführt, so bildet sich ein mehr zusammenhängendes Gittermuster aus, wie dies beispielhaft in Figur 3 dargestellt ist (Laser linear polarisiert in Y-Richtung; Scanrichtung in X-Richtung). Die Gitterkonstante der so erzeugten LIPSS liegt bei ca. 800 nm für einen 1040 nm Laser und deutlich darunter für einen 520 nm Laser (siehe auch US 7,875,414 B2, welche den Oberbegriff des Anspruchs 1 offenbart).

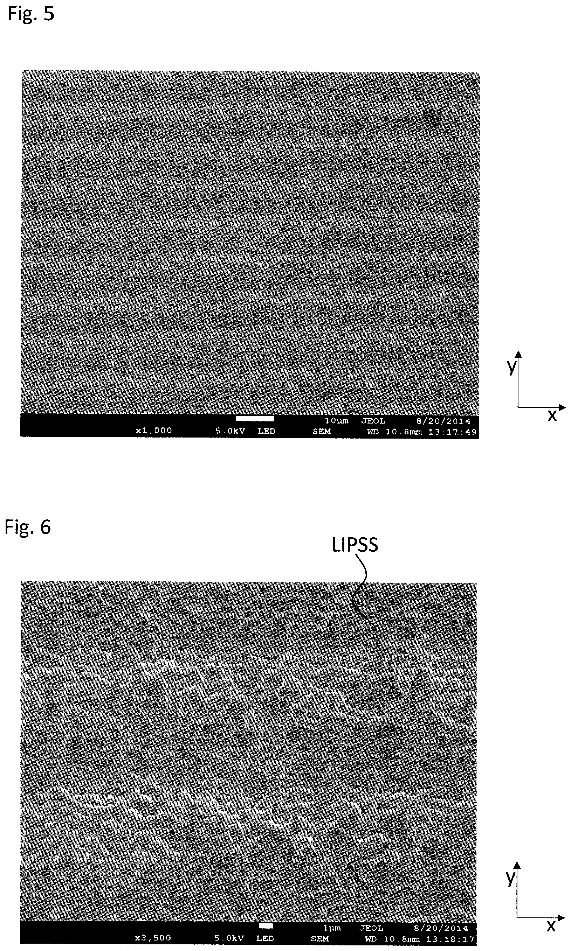

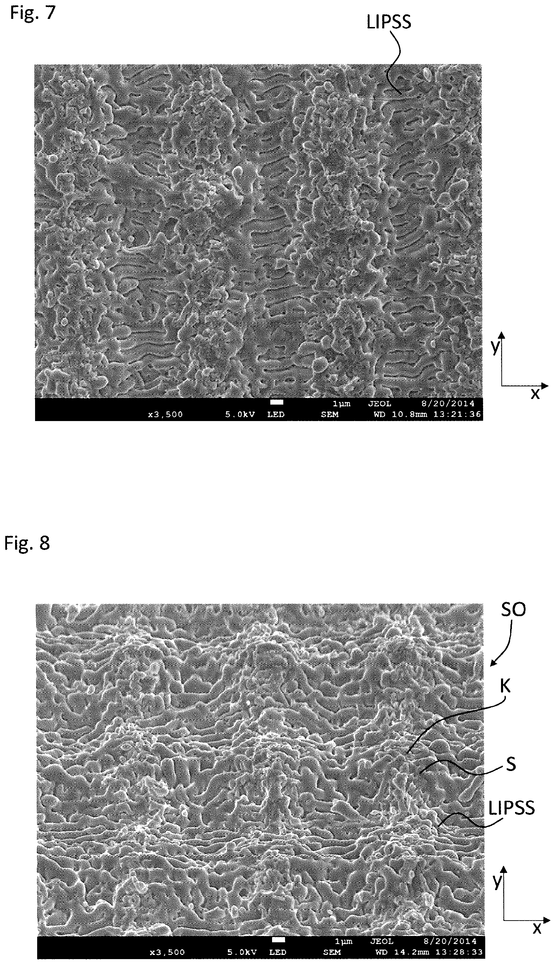

Bei Materialien, welche insbesondere für Leuchtenoptiken verwendet werden - wie insbesondere Glas - verhält es sich mit der Ausrichtung der Längsachsen der durch Laserbeeinflussung entstehenden Ripple zur Polarisationsrichtung eines linear polarisierten Lasers genau anders herum. Bewegt sich der Schreibstrahl des Lasers also parallel zur Polarisationsrichtung, so entsteht ein mehr zusammenhängendes Gittermuster. Dies ist beispielhaft in den Figuren 5 und 6 gezeigt, welche eine Glasoberfläche zeigen, die mit linear in X-Richtung polarisiertem Laser bei Scanrichtung ebenfalls in X-Richtung bearbeitet wurde. Bewegt sich der Schreibstrahl quer zur Polarisationsrichtung, so entsteht ein streifenförmiges Ripple-Muster. Dies ist beispielhaft in Figur 7 dargestellt, welche eine Glasoberfläche zeigt, die mit linear in X-Richtung polarisiertem Laser bei Scanrichtung in Y-Richtung bearbeitet wurde.

Aus dem Stand der Technik ist es bisher nicht bekannt, die vorbezeichneten Mikro- und Nanostrukturen für Optiken für Leuchten und insbesondere als breitbandiges Streumittel für Beleuchtungszwecke zu verwenden.

Es ist somit eine Aufgabe der vorliegenden Erfindung, eine Streuoptik mit mittels Lasern gebildeter Streustruktur (Mikro- und Nanostrukturen) für Leuchten optimiert auszubilden bzw. bereitzustellen.

Die Aufgabe wird durch den Gegenstand des unabhängigen Anspruchs gelöst. Die abhängigen Ansprüche bilden den zentralen Gedanken der Erfindung in besonders vorteilhafter Weise weiter.

Gemäß einem ersten Aspekt betrifft die vorliegende Erfindung ein Verfahren zur Herstellung einer Streuoptik mit Streustruktur für Leuchten. Das Verfahren weist die folgenden Schritte auf: Bereitstellen eines Optikelements, und Bearbeiten des Optikelements zur Bildung der Streustruktur mittels Laser in wenigstens zwei Bearbeitungsschritten. Bei dem ersten Bearbeitungsschritt fährt der Laser das Optikelement entlang einer ersten Verfahrrichtung relativ zum Optikelement ab, wobei die Verfahrrichtung in einem definierten Winkel α zur Polarisationsrichtung des Lasers steht. Unter der Verfahrrichtung "relativ" zum Optikelement wird grundsätzlich eine Relativbewegung zwischen Laser bzw. Laserstrahl und Optikelement verstanden, wobei es unerheblich ist, ob nur der Laser bewegt wird, nur das Optikelement bewegt wird, oder beide relativ zueinander bewegt werden. Bei dem zweiten Bearbeitungsschritt fährt der Laser das Optikelement entlang einer zweiten Verfahrrichtung relativ zum Optikelement ab, wobei die Verfahrrichtung in einem definierten Winkel β zur Polarisationsrichtung des Lasers und in einem Winkel γ > 0° relativ zur ersten Verfahrrichtung bezüglich des Optikelements steht.

Erfindungsgemäß werden somit mehrere Bearbeitungsschritte bzw. Scanschritte mit dem Laser durchgeführt, wobei sich die jeweiligen Verfahrrichtungen bzw. - ausrichtungen kreuzen; also die Scanrichtung als auch bevorzugt die Polarisationsrichtung relativ zum Werkstück geändert werden. Anstelle der zuvor beschriebenen und aus dem Stand der Technik bekannten Gitterstruktur bilden sich in diesem Fall wenige hundert Nanometer große Noppen aus, wie sie beispielsweise in Figur 4 gezeigt sind. Figur 4 zeigt hierbei ein (Silizium-) Optikelement, welches durch zweimaliges Scannen mit dazwischen (leicht) geänderter Polarisationsrichtung und Scanrichtung bearbeitet wurde. Durch das sich kreuzende Abfahren bzw. Scannen des Lasers kann eine sich in gewissen Grenzen beeinflussbare Regelmäßigkeit der Oberflächenstruktur - also der Mikro- und Nanostruktur - erzielt werden. Die so erzeugte Streustruktur mit sich überlagernder Mikro- und Nanostruktur führt zu einer Streuoptik mit homogener Lichtverteilung, bei der sich das Beugungsbild der Streugeometrie nicht oder nicht mehr merklich sichtbar abbildet. Wird der Schreibstrahl also über die gleiche Stelle mit etwas geänderter Polarisationsrichtung und Schreibrichtung geführt, können beispielsweise kuppelartige Strukturen in vergleichbarer Dimension zu den LIPSS generiert werden, wie dies beispielhaft auf dem Silizium-Halbleiter Element (Wafer) in Figur 4 dargestellt ist. Silizium ist undurchsichtig und daher bevorzugt als Streuspiegel mit einer Spiegelbeschichtung verwendbar, wie im Weiteren auch erläutert; prinzipiell ist es aber auch denkbar, in gleicher Weise ein Glas-Optikelement zu verwenden.

Vorzugsweise ändert sich die Ausrichtung der Polarisationsrichtung relativ zu den jeweiligen Verfahrrichtungen des Lasers nicht. Die Polarisationsrichtungen der jeweiligen Verfahrrichtungen stehen somit ebenfalls in einem Winkel γ zueinander, so dass entsprechend gezielt definierte Mikro- und Nanostrukturen für die Streustruktur erzielt werden können.

In einer bevorzugten Ausgestaltungsform beträgt der Winkel α zwischen 40° und 50° und vorzugsweise 45°. Ebenso kann der Winkel β zwischen 40° und 50° und vorzugsweise 45° betragen. In einer besonders bevorzugten Ausgestaltungsform ist der Winkel α gleich dem Winkel β und diese betragen höchst vorzugsweise 45°. Auf diese Weise kann eine besonders bevorzugte, weitestgehend definierte Mikro- und Nanostruktur erzielt werden, welche im Wesentlichen gleichmäßig ausgebildete Noppenstrukturen bildet, auf der die durch die Erstreckung der LIPSS gebildete Nanostruktur bevorzugt definiert ausgerichtet und ausgebildet ist, um eine besonders homogene Lichtverteilung zu erzeugen.

Der Winkel γ kann bevorzugt größer als 45° und besonders bevorzugt 90° betragen. Insbesondere im Zusammenhang mit entsprechend definierten Winkeln α und β kann somit die Streustruktur in gewünschter Weise definiert ausgebildet werden, um eine besonders homogene Lichtverteilung zu erzeugen.

Figur 8 zeigt hierzu eine Streuoptik ausgehend von einem (Glas)-Optikelement, dessen Oberfläche bei einer Scanrichtung in X-Richtung im ersten Bearbeitungsschritt und in Y-Richtung im zweiten Bearbeitungsschritt bei konstant linear in X-Richtung polarisiertem Laser bearbeitet wurde; also γ = 90° (hier bei ungefähr α = 0° und β = 90°).

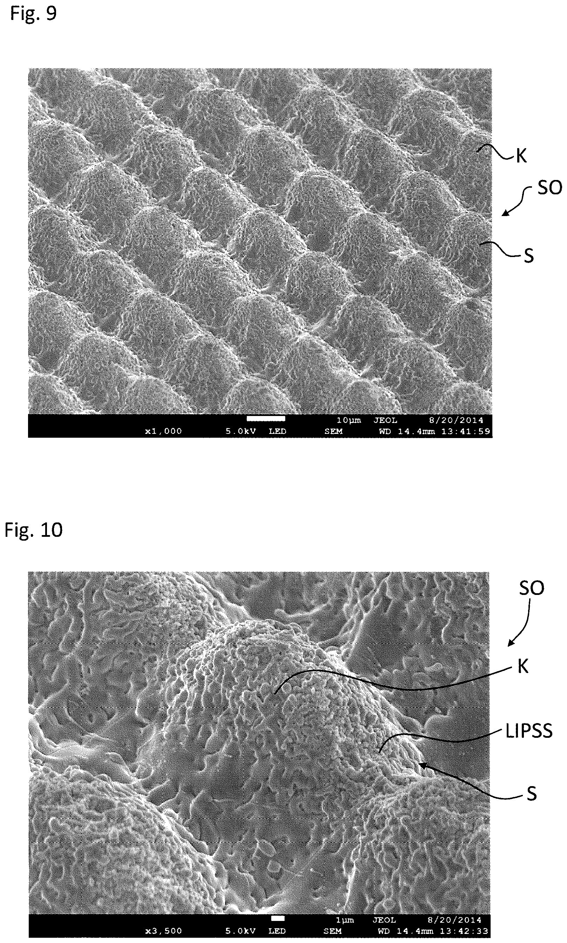

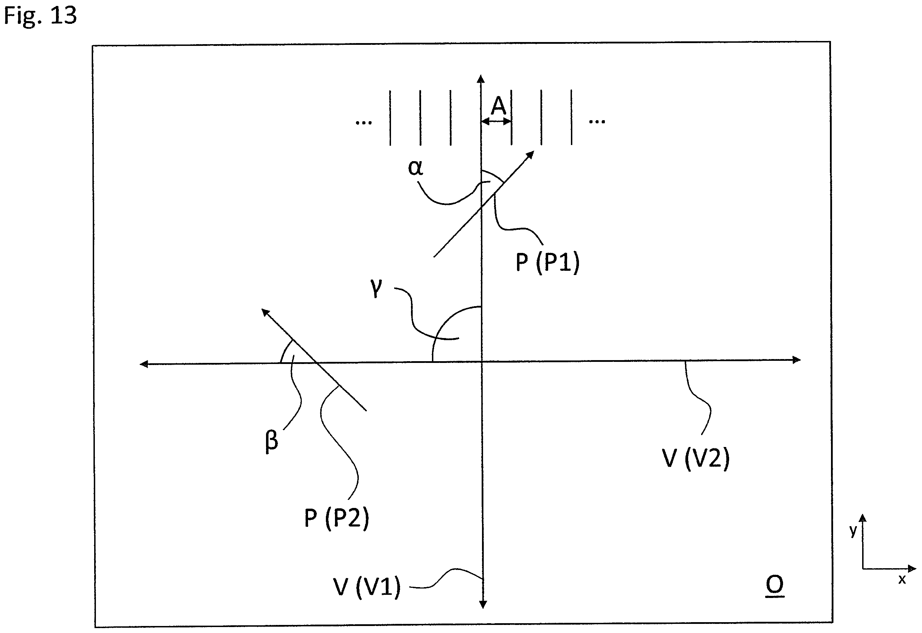

Figuren 9 und 10 zeigen eine besonders bevorzugt hergestellte Streuoptik ausgehend von einem (Glas-)Optikelement, dessen Oberfläche bei einer Scanrichtung in X-Richtung im ersten Bearbeitungsschritt und linear im 45°-Winkel (also α = 45°) zur X-Richtung polarisiertem Laser sowie bei einer Scanrichtung in Y-Richtung im zweiten Bearbeitungsschritt und linear im 45°-Winkel (also β = 45°) zur X-Richtung polarisiertem Laser bearbeitet wurde (siehe auch schematische Darstellung der Figur 13). Das in Figur 13 dargestellte Bearbeitungsbild kann auf mehreren Bearbeitungswegen erreicht werden. Eine Variante ist folgende: Zwischen den beiden Bearbeitungsschritten werden also beispielsweise Optikelement und Laser relativ zueinander um 90° gedreht und die Verfahrrichtungen in beiden Bearbeitungsschritten 45° zur X-Richtung gewählt. Hält man die Polarisationsrichtung des Lasers linear polarisiert in Y-Richtung, stehen die resultierenden Verfahrrichtungen durch die Rotation des Optikelements ebenfalls im 90° Winkel zueinander und die korrespondierende Ausrichtung der Polarisation des Lasers ergibt sich wie in Figur 13 dargestellt. Es ist auch denkbar, das Optikelement nicht zu rotieren, in X- und danach in Y-Richtung zu Scannen, und die Polarisationsrichtung zwischen den beiden Bearbeitungsschritten von α = 45° auf β = 45° zu drehen. Hierbei entsteht in beiden bevorzugten Fällen eine besonders bevorzugte Nanostruktur auf einer kuppelartigen Mikrostruktur, welche im Weiteren noch näher beschrieben ist.

Es versteht sich, dass das erfindungsgemäße Verfahren auch mehr als zwei entsprechende Bearbeitungsschritte aufweist, wobei wenigstens zwei dieser Bearbeitungsschritte erfindungsgemäß durchgeführt werden sollen. Sollten mehr als zwei Bearbeitungsschritte vorgesehen sein, so ergibt sich für die weiteren bevorzugt eine Definition vergleichbar der des zweiten Bearbeitungsschrittes angewandt auf wenigstens einen, mehrere oder alle anderen vorhergehenden Bearbeitungsschritte.

Gemäß einer besonders bevorzugten Ausgestaltungsform werden zwischen den (beiden) Bearbeitungsschritten das Optikelement und/oder der Laser, also dessen Polarisationsrichtung, und/oder die Verfahrrichtung des Lasers gedreht - also insbesondere eine Relativdrehung zueinander durchgeführt - um die vorgegebenen Winkel α, β und γ zu erzielen.

Gemäß einer bevorzugten Ausgestaltungsform kreuzen sich die durch den Laser-induzierten periodischen Oberflächenstrukturen (LIPSS) der unterschiedlichen Bearbeitungsschritte einander, so dass eine bevorzugte Kuppelstruktur erzielt werden kann.

Je nach verwendeter Laserwellenlänge, Anzahl der einander folgenden Bearbeitungsschritte, Einfallswinkel des Laserstrahles auf das Optikelement oder dessen Materialzusammensetzung um beispielhaft einige Einflussgrößen zu nennen, können die durch den Laser induzierten periodischen Oberflächenstrukturen (LIPSS) eine unterschiedliche Gitterkonstante aufweisen (insbesondere eine Gitterkonstante von Λ ≤ 800 nm). Beispielsweise auf Kalk-Natron-Glas konnte sich bei 90° Einfallswinkel des Lasers mit einer Wellenlänge von 520nm und 350fs Pulslänge eine Gitterkonstante von überwiegend Λ ≤ 800 nm ausbilden.

Gemäß einer bevorzugten Ausgestaltungsform fährt der Laser das Optikelement je Verfahrrichtung mehrfach mit parallelem Versatz der jeweiligen Verfahrwege ab. Es werden also je Bearbeitungsschritt mehrere parallel zueinander ausgerichtete Verfahrwege bzw. Scanwege durchgeführt. Auf diese Weise wird es ermöglicht, die Streustruktur auf einem definierten Bereich des Optikelements zu bilden. Insbesondere bevorzugt wird die Streustruktur auf diese Weise auf der gesamten Oberfläche des Optikelements ausgebildet. Bevorzugt ist der parallele Versatz der einzelnen Verfahrwege (wenigstens je Bearbeitungsschritt) identisch, wobei er jedoch auch unterschiedlich sein kann. Der Versatz kann im Nanometerbereich liegen. Bevorzugt beträgt der parallele Versatz der einzelnen Verfahrwege den zirka halben Fokusdurchmesser des Laserstrahles, um eine möglichst ebene Fläche zu erzeugen, oder ungefähr den Durchmesser des Fokus des Laserstrahles, um wellige Mikrostrukturen zu generieren, die mit LIPSS überzogen sind. Der parallele Versatz beträgt also bevorzugt zwischen dem halben und dem ganzen Fokusdurchmesser des Lasers. Der parallele Versatz der Verfahrwege je Bearbeitungsschritt kann konstant sein oder sie können voneinander abweichend gewählt sein, wobei vorzugsweise der Versatz des ersten Bearbeitungsschrittes gleich dem Versatz des zweiten Bearbeitungsschrittes gewählt ist oder diese auch voneinander abweichen. Das gleiche gilt auch für eventuell weitere Bearbeitungsschritte.

Dabei wird als Laser ein Pikosekundenlaser oder ein Femtosekundelaser verwendet, um die bevorzugten Nanostrukturen definiert auszubilden. Die Verfahrgeschwindigkeit des Lasers während der Bearbeitungsschritte, insbesondere der einzelnen bevorzugten linearen Verfahrwege, beträgt vorzugsweise eine auf die gewählte Pulsfrequenz und Leistung des Lasers abgestimmte Geschwindigkeit, sodass die einzelnen Laserpulse einen Abstand erreichen, der wiederum bevorzugt in der Größenordnung des halben Fokusdurchmessers liegt. Beispielsweise ergibt eine Pulsfrequenz von 200kHz und ein Fokusdurchmesser von 10µm eine Verfahrgeschwindigkeit von 1000 mm/s. Die Verfahrgeschwindigkeit des Lasers kann konstant sein, sie kann jedoch herstellungsbedingt auch in anderer Weise optimiert ausgelegt sein; bspw. kann sie einem vordefinierten oder gesteuerten Verfahrprofil folgen. Insbesondere kann die Verfahrgeschwindigkeit des Lasers während der Bearbeitungsschritte, insbesondere der einzelnen bevorzugt linearen Verfahrwege, 500 bis 1500 mm/s betragen.

Der Laser hat bevorzugt einen Strahldurchmesser von 10-20 µm, wodurch eine bevorzugte Mikrostruktur bei gleichzeitig bevorzugt überlagerter Nanostruktur (LIPSS) gebildet werden kann.

Die Polarisation des Lasers bzw. des Laserstrahls ist vorzugsweise linear. Es wird also ein linear polarisierter Laser verwendet, um eine definierte Polarisationsrichtung bereitzustellen.

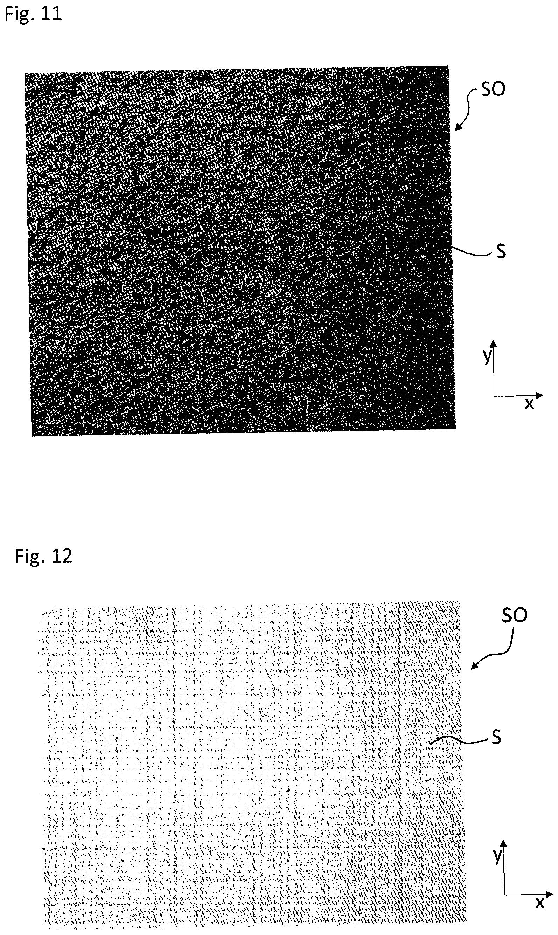

Wie bereits erwähnt, können durch die zwei Bearbeitungsschritte rippen- oder kuppelartige Streustrukturen auf der Oberfläche der Streuoptik gebildet werden. Diese Mikrostrukturen überlagern sich verfahrensbedingt mit entsprechenden Nanostrukturen (insbesondere LIPSS) und bilden somit eine gewünschte Streustruktur (Mikro- und Nanostruktur) zur besonders homogenen Lichtverteilung. Die Mikrostrukturen weisen bevorzugt eine gleichbleibende oder veränderte (also in Richtung des jeweiligen Versatzes der Verfahrrichtungen gesehen unterschiedliche) Gitterkonstante auf. Letztere kann beispielsweise aus einer Primzahlkaskade zum Laser gebildet werden und ein definiertes Gitter der Mikrostruktur erzeugen, wie in Figur 12 gezeigt.

Gemäß einer besonders bevorzugten Ausgestaltungsform sind bei den erzeugten kuppelartigen Streustrukturen die Laser-induzierten periodischen Oberflächenstrukturen (LIPSS) - also die Nanostrukturen - je Kuppel über den Umfang der Kuppel gesehen im Wesentlichen vom Tal der Kuppel zur Spitze der Kupple ausgerichtet bzw. verlaufen entsprechend. Die einzelnen kuppelartigen Mikrostrukturen weisen folglich bevorzugt eine Art "Zitronenpressenstruktur" auf, welche durch die Nanostrukturen auf der Mikrostruktur gebildet sind.

Mithilfe des erfindungsgemäßen Verfahrens kann eine Streuoptik hergestellt werden, welche eine mittels Laser aufgebrachte kuppelartige Streustruktur auf ihrer Oberfläche aufweist, bei der die Laser-induzierten periodischen Oberflächenstrukturen (LIPSS) je Kuppel über den Umfang der Kuppel gesehen im Wesentlichen vom Teil der Kuppel zur Spitze der Kuppel verlaufen bzw. ausgerichtet sind. Auf diese Weise wird die bereits vorbezeichnete "Zitronenpressenstruktur" erreicht, welche eine besonders homogene Lichtverteilung der Streuoptik zur Folge hat.

Die Streuoptik ist bevorzugt aus Glas hergestellt, wobei grundsätzlich auch andere für Streuoptiken insbesondere für Leuchten verwendete Materialien, welche entsprechend mit Laser bearbeitbar sind, denkbar sind.

Die Strukturen der Streuoptik können im Durchlicht als Streuscheiben dienen und verspiegelt als Streureflektoren eingesetzt werden. Hierzu weist die Streuoptik an der die Streustruktur gegenüberliegenden Oberfläche eine separat vorgesehene oder auf die Oberfläche aufgebrachte Verspiegelung auf. Mit anderen Worten kann an der der Streustruktur gegenüberliegenden Oberfläche der Streuoptik eine Verspiegelung vorgesehen sein bzw. an der der Streustruktur gegenüberliegenden Oberfläche ein Reflektor angeordnet bzw. vorgesehen sein.

Um einen entsprechenden Streureflektor mit möglichst wenigen Reflektionsverlusten am Spiegel bereitzustellen, bietet sich insbesondere, wie sich herausgestellt hat, eine körnige Struktur mit zufälliger Verteilung unterschiedlicher Korngrößen an, wie sie beispielsweise in Figur 11 dargestellt ist.

Einige Ausführungsbeispiele der vorliegenden Erfindung sind in den bereits zuvor beschrieben Figuren beispielhaft dargestellt. Es zeigen:
- Figur 1:: die Oberfläche eines Elements bei Ablation mit Nanosekundenlaser,
- Figur 2:: die Oberfläche eines mit einem linear polarisierten Laser in Y-Richtung sowie einer Verfahr- bzw. Scanrichtung ebenfalls in Y-Richtung bearbeiteten Metall- bzw. Halbleiterelements zum Erhalten eines streifenförmigen Ripple-Musters,
- Figur 3:: die Oberfläche eines mit einem linear polarisierten Laser in Y-Richtung sowie einer Verfahr- bzw. Scanrichtung des Lasers in X-Richtung bearbeiteten Metall- bzw. Halbleiterelements zur Erzielung eines im Wesentlichen zusammenhängenden Gittermusters,
- Figur 4:: eine erfindungsgemäß bearbeitete bzw. hergestellte Oberfläche einer ( Silizium Spiegel-Streuoptik nach zweimaligem Scannen der Oberfläche mittels Laser mit dazwischen leicht geänderter Polarisationsrichtung und Scan- bzw. Verfahrrichtung,
- Figur 5:: eine Streuoptik aus Glas, deren Oberfläche mittels Laser mit Polarisationsrichtung in X-Richtung und Scan- bzw. Verfahrrichtung ebenfalls in X-Richtung bearbeitet wurde,
- Figur 6:: eine vergrößerte Darstellung der in Figur 5 gezeigten Oberfläche,
- Figur 7:: eine Streuoptik aus Glas, deren Oberfläche mittels Laser mit einer Polarisationsrichtung in X-Richtung sowie einer Scan- bzw. Verfahrrichtung in Y-Richtung bearbeitet wurde,
- Figur 8:: eine (Glas-)Streuoptik gemäß der vorliegenden Erfindung, deren Oberfläche mittels Laser mit Polarisationsrichtung in X-Richtung sowie einer Scan- bzw. Verfahrrichtung in X-Richtung in einem ersten Bearbeitungsschritt und in Y-Richtung in einem zweiten Bearbeitungsschritt bearbeitet wurde,
- Figur 9:: eine (Glas-)Streuoptik, deren Oberfläche bei einer Scanrichtung in X-Richtung im ersten Bearbeitungsschritt und linear im 45°-Winkel zur X-Richtung polarisiertem Laser sowie bei einer Scanrichtung in Y-Richtung im zweiten Bearbeitungsschritt und linear im 45°-Winkel zur X-Richtung polarisiertem Laser bearbeitet wurde,
- Figur 10:: eine vergrößerte Darstellung der Oberflächenstruktur aus Figur 9 zur Darstellung der kuppelartigen Struktur mit "zitronenpressenartiger" Ausrichtung der LIPSS,
- Figur 11:: (Glas-) Streuoptik, deren Oberfläche mittels Laser mit kontinuierlich rotierender Polarisation sowie kontinuierlich rotierender Scan-bzw. Verfahrrichtung hergestellt wurde,
- Figur 12:: (Glas-) Streuoptik, deren Streustruktur mittels Laser mit Polarisation in Y-Richtung sowie Scan- bzw. Verfahrrichtung in X-Richtung einerseits und Y-Richtung andererseits - also mit kreuzenden Verfahrrichtungen - hergestellt wurde, wobei die Gitterkonstante variable nach Primzahlkaskade eingestellt bzw. verändert wurde, und
- Figur 13:: eine schematische Darstellung eines erfindungsgemäßen Verfahrens zur Herstellung einer Streuoptik mit einer Oberfläche gemäß Figuren 9 und 10.

Das erfindungsgemäße Verfahren ist zuvor bereits dargestellt worden. Figur 13 zeigt hierzu beispielhaft und schematisch eine bevorzugte Ausgestaltung des erfindungsgemäßen Verfahrens zur Herstellung erfindungsgemäßer Streuoptiken SO mit Streustruktur S für Leuchten, insbesondere einer Streuoptik SO gemäß den Figuren 9 und 10. Das erfindungsgemäße Verfahren weist hierzu folgende Schritte auf:
Zunächst wird ein entsprechendes Optikelement O bereitgestellt, welches bevorzugt aus Glas oder auch einem anderen für eine Leuchtenoptik geeigneten Material hergestellt ist. Das Optikelements O wird zur Bildung der Streustruktur S mittels Laser in wenigstens zwei Bearbeitungsschritten bearbeitet.

Bei dem ersten Bearbeitungsschritt fährt der Laser - ein Piko- oder Femtosekundenlaser - das Optikelement O entlang einer ersten Verfahrrichtung V1 relativ zum Optikelement O ab (hier in Y-Richtung). Die erste Verfahrrichtung V1 steht hierzu in einem definierten Winkel α zur Polarisationsrichtung P (P1) des Lasers. Der Winkel α liegt bevorzugt zwischen 40° und 50° und beträgt besonders bevorzugt α = 45°, wie in Figur 13 dargestellt.

Bei dem zweiten Bearbeitungsschritt fährt der Laser das Optikelement O entlang einer zweiten Verfahrrichtung V2 relativ zum Optikelement O ab (hier in X-Richtung). Die zweite Verfahrrichtung V2 steht dabei in einem definierten Winkel β zur Polarisationsrichtung P (P2) des Lasers und in einem Winkel γ > 0° relativ zur ersten Verfahrrichtung V1 bzgl. des Optikelements O. Der Winkel β liegt bevorzugt zwischen 40° und 50° und beträgt besonders bevorzugt β = 45°, wie in Figur 13 dargestellt. In einer besonders bevorzugten Ausgestaltungsform ist der Winkel α dabei gleich dem Winkel β und besonders bevorzugt α = β = 45°. Die Ausrichtung der Polarisationsrichtung P (P1, P2) relativ zu den jeweiligen Verfahrrichtungen V1, V2 des Lasers ändert sich bevorzugt nicht. Der Winkel γ ist bevorzugt größer als 45° und beträgt höchst bevorzugt γ = 90°.

Der Laser weist bevorzugt einen Strahldurchmesser von 10 bis 20 µm auf. Die Polarisation(-srichtung) des Lasers bzw. des Laserstrahls ist bevorzugt linear.

Zwischen den beiden Bearbeitungsschritten wird/werden das Optikelement O und/oder der Laser, also dessen Polarisationsrichtung P, und/oder die Verfahrrichtung V des Lasers gedreht werden, um die vorgegebenen Winkel α, β, γ zu erzielen. Wie die Relativbewegung zustande kommt und welche Elemente hierzu bewegt/gedreht werden müssen, ist dabei unerheblich.

Der Laser scannt bzw. fährt das Optikelement O je Verfahrrichtung V1, V2 mehrfach mit parallelem Versatz A der jeweiligen Verfahrwege ab, um die Streustruktur auf einem definierten Bereich, vorzugsweise der gesamten Oberfläche des Optikelements O, zu bilden. In Figur 13 sind der Übersichtlichkeit halber die einzelnen Verfahrwege in Verfahrrichtung V1 des ersten Bearbeitungsschrittes lediglich schematisch angedeutet und beispielhaft zwischen zweien der Versatz A dargestellt. Der Versatz ist bevorzugt konstant gewählt, kann jedoch auch variieren. Dasselbe gilt im Übrigen auch für den zweiten Bearbeitungsschritt (und auch jeden möglichen weiteren), wobei der Versatz A gleich dem Versatz A des ersten Bearbeitungsschrittes gewählt werden oder auch von diesem abweichen kann. Bevorzugt wird ein paralleler Versatz A zwischen dem halben und dem ganzen Fokusdurchmesser des Lasers gewählt.

Die Verfahrgeschwindigkeit des Lasers beträgt während der Bearbeitungsschritte, insbesondere der einzelnen bevorzugt linearen Verfahrwege, 500 bis 1500 mm/s. Die Verfahrgeschwindigkeit wird dabei während des gesamten Verfahrens bevorzugt konstant gewählt, sie kann jedoch auch einem vordefinierten oder gesteuerten Verfahrprofil folgen.

Durch die zwei Bearbeitungsschritte werden rippen- oder kuppelartige Streustrukturen S auf der Oberfläche der Streuoptik gebildet werden.

Die durch den Laser induzierten periodischen Oberflächenstrukturen (LIPSS) der unterschiedlichen Bearbeitungsschritte kreuzen sich bevorzugt einander und bilden so eine definierte Nanostruktur auf der entstehenden (rippen- oder kuppelartigen) Streustrukturen S bzw. Mikrostruktur (vgl. bspw. Figuren 4, 8-10 und 12). Bevorzugt weisen die durch den Laser induzierten periodischen Oberflächenstrukturen (LIPSS) eine Gitterkonstante von Λ ≤ 800nm auf.

Bei den kuppelartigen Streustrukturen S sind die Laser-induzierten periodischen Oberflächenstrukturen (LIPSS) je Kuppel K bevorzugt über den Umfang der Kuppel K gesehen im Wesentlichen vom Tal T der Kuppel K zur Spitze Z der Kuppel K ausgerichtet bzw. verlaufen entsprechend und bilden somit eine Art "Zitronenpressenstruktur auf der Makrostruktur aus. Dies ist in den Figuren 9 und 10 gut erkennbar.

Die Erfindung ist nicht auf die vorbezeichneten und in den Figuren dargestellten Ausführungsbeispiele beschränkt, sofern sie vom Gegenstand der beigefügten Ansprüche umfasst ist. Insbesondere können die Merkmale der Ausführungsbeispiele beliebig miteinander kombinierte werden, solange sie vom Gegenstand der Erfindung umfasst sind.

## Patentansprüche

1. Verfahren zur Herstellung einer Streuoptik (SO) mit Streustruktur (S) für Leuchten, aufweisend die folgenden Schritte:
• Bereitstellen eines Optikelements (O),
• Bearbeiten des Optikelements (O) zur Bildung der Streustruktur (S) mittels Laser in wenigstens zwei Bearbeitungsschritten, wobei als Laser ein Piko- oder Femtosekundenlaser verwendet wird, wobei
o Bei dem ersten Bearbeitungsschritt der Laser das Optikelement (O) entlang einer ersten Verfahrrichtung (V1) relativ zum Optikelement (O) abfährt, welche in einem definierten Winkel α zur Polarisationsrichtung (P, P1) des Lasers steht, und
o Bei dem zweiten Bearbeitungsschritt der Laser das Optikelement (O) entlang einer zweiten Verfahrrichtung (V2) relativ zum Optikelement (O) abfährt, welche in einem definierten Winkel β zur Polarisationsrichtung (P, P2) des Lasers und in einem Winkel γ > 0° relativ zur ersten Verfahrrichtung (V1) bzgl. des Optikelements (O) steht und wobei sich die Verfahrrichtungen (V1, V2) kreuzen,
wobei sich die durch den Laser induzierten periodischen Oberflächenstrukturen (LIPSS) der unterschiedlichen Bearbeitungsschritte als Nanostrukturen einander kreuzen,
wobei durch die zwei Bearbeitungsschritte rippen- oder kuppelartige Streustrukturen (S) auf der Oberfläche der Streuoptik (SO) gebildet werden, und
wobei durch das sich kreuzende Abfahren des Lasers die Streustruktur mit sich überlagernder Mikro- und Nanostruktur erzeugt wird.

2. Verfahren gemäß Anspruch 1, wobei sich die Ausrichtung der Polarisationsrichtung (P) relativ zu den jeweiligen Verfahrrichtungen (V) des Lasers nicht ändert.

3. Verfahren gemäß Anspruch 1 oder 2, wobei der Winkel α zwischen 40° und 50° liegt, vorzugsweise α = 45° ist, und/oder
wobei der Winkel β zwischen 40° und 50° liegt, vorzugsweise β = 45° ist, und/oder
wobei der Winkel α gleich dem Winkel β ist, vorzugsweise α = β = 45°, und/oder
wobei der Winkel γ > 45° und bevorzugt γ = 90° ist, und/oder wobei zwischen den beiden Bearbeitungsschritten das Optikelement (O) und/oder der Laser, also dessen Polarisationsrichtung (P), und/oder die Verfahrrichtung (V) des Lasers gedreht werden, um die vorgegebenen Winkel α, β, γ zu erzielen.

4. Verfahren gemäß einem der vorhergehenden Ansprüche,
wobei die durch den Laser induzierten periodischen Oberflächenstrukturen (LIPSS) eine Gitterkonstante von Λ ≤ 800nm aufweisen, und/oder
wobei durch die zwei Bearbeitungsschritte rippen- oder kuppelartige Streustrukturen (S) auf der Oberfläche der Streuoptik (SO) gebildet werden, welche eine gleichbleibende oder veränderte Gitterkonstante aufweisen,
und/oder
wobei bei den kuppelartigen Streustrukturen (S) die Laser-induzierten periodischen Oberflächenstrukturen (LIPSS) je Kuppel (K) im Wesentlichen vom Tal (T) der Kuppel (K) zur Spitze (Z) der Kuppel (K) verlaufen bzw. ausgerichtet sind.

5. Verfahren gemäß einem der vorhergehenden Ansprüche, wobei der Laser das Optikelement (O) je Verfahrrichtung (V) mehrfach mit parallelem Versatz (A) der jeweiligen Verfahrwege abfährt, um die Streustruktur (S) auf einem definierten Bereich, vorzugsweise der gesamten Oberfläche des Optikelements (O), zu bilden,
wobei der parallele Versatz (A) vorzugsweise zwischen dem halben und dem ganzen Fokusdurchmesser des Lasers beträgt, und/oder wobei die Verfahrgeschwindigkeit des Lasers während der Bearbeitungsschritte, insbesondere der einzelnen bevorzugt linearen Verfahrwege, 500 bis 1500 mm/s beträgt.

6. Verfahren gemäß einem der vorhergehenden Ansprüche, wobei der Laser einen Strahldurchmesser von 10 bis 20 µm aufweist, und/oder wobei die Polarisation des Lasers bzw. des Laserstrahls linear ist.

## Claims

1. Method of producing a scattering optics (SO) with a scattering structure (S) for lamps, comprising the steps of:
• providing an optical element (0),
• processing the optical element (O) to form the scattering structure (S) by laser in at least two processing steps, wherein a pico laser or femtosecond laser is used as the laser, wherein
o in the first processing step, the laser traverses the optical element (O) along a first travel direction (V1) relative to the optical element (O), said travel direction being at a defined angle α to the polarization direction (P, P1) of the laser, and
o in the second processing step, the laser traverses the optical element (O) along a second travel direction (V2) relative to the optical element (0), said travel direction being at a defined angle β to the polarization direction (P, P2) of the laser and at an angle γ > 0° relative to the first travel direction (V1) with respect to the optical element (O), and wherein the travel directions (V1, V2) intersect,
wherein the laser-induced periodic surface structures (LIPSS) of the different processing steps intersect one another as nanostructures,
wherein the two processing steps form rib-like or dome-like scattering structures (S) on the surface of the scattering optics (SO), and
wherein the intersecting traverse of the laser generates the scattering structure with a superimposed micro- and nanostructure.

2. Method according to Claim 1, wherein the orientation of the polarization direction (P) relative to the respective travel directions (V) of the laser does not change.

3. Method according to Claim 1 or 2, wherein the angle α is between 40° and 50°, preferably α = 45°, and/or
wherein the angle β is between 40° and 50°, preferably β = 45°, and/or
wherein the angle α is equal to the angle β, preferably a = β = 45°, and/or
wherein the angle γ is > 45°, preferably γ = 90°, and/or
wherein between the two processing steps, the optical element (O) and/or the laser, i.e., its polarization direction (P), and/or the travel direction (V) of the laser are rotated in order to achieve the predetermined angles α, β, γ.

4. Method according to one of the preceding claims,
wherein the laser-induced periodic surface structures (LIPSS) have a lattice constant of Λ < 800 nm, and/or
wherein the two processing steps form rib-like or dome-like scattering structures (S), having an unchanged or changed lattice constant, on the surface of the scattering optics (SO), and/or
wherein, in the case of the dome-like scattering structures (S), the laser-induced periodic surface structures (LIPSS) per dome (K) run or are oriented substantially from the valley (T) of the dome (K) to the tip (Z) of the dome (K).

5. Method according to one of the preceding claims, wherein the laser traverses the optical element (O) per travel direction (V) several times with a parallel offset (A) of the respective travel paths in order to form the scattering structure (S) on a defined region, preferably on the entire surface of the optical element (O),
wherein the parallel offset (A) is preferably between half the focus diameter and the entire focus diameter of the laser, and/or wherein the travel speed of the laser during the processing steps, in particular during the individual, preferably linear travel paths, is 500 to 1500 mm/sec.

6. Method according to one of the preceding claims, wherein the laser has a beam diameter of 10 to 20 µm, and/or wherein the polarization of the laser or of the laser beam is linear.

## Revendications

1. Procédé de production d'une optique de dispersion (SO) dotée d'une structure de dispersion (S) pour dispositifs d'éclairage, présentant les étapes suivantes consistant à :
• se pourvoir d'un élément optique (0),
• usiner l'élément optique (O) afin de former la structure de dispersion (S) au moyen d'un laser en au moins deux étapes d'usinage, le laser utilisé étant un laser picoseconde ou femtoseconde, étant entendu que
o lors de la première étape d'usinage, le laser parcourt l'élément optique (O) dans une première direction de déplacement (V1) par rapport à l'élément optique (O), laquelle se situe selon un angle défini α par rapport à la direction de polarisation (P, P1) du laser, et
o lors de la deuxième étape d'usinage, le laser parcourt l'élément optique (O) dans une deuxième direction de déplacement (V2) par rapport à l'élément optique (O), laquelle se situe selon un angle défini β par rapport à la direction de polarisation (P, P2) du laser et selon un angle γ > 0° par rapport à la première direction de déplacement (V1) relative à l'élément optique (O), lesdites directions de déplacement (V1, V2) se croisant,
les structures périodiques de surface induites par laser (LIPSS) des différentes étapes d'usinage se croisant les unes les autres sous la forme de nanostructures,
les deux étapes d'usinage permettant de former des structures de dispersion (S) de type nervurées ou à dômes sur la surface de l'optique de dispersion (SO), et
le parcourt croisé du laser permettant de doter la structure de dispersion d'une microstructure et nanostructure en chevauchement.

2. Procédé selon la revendication 1, dans lequel l'orientation de la direction de polarisation (P) par rapport aux directions de déplacement (V) respectives du laser ne varie pas.

3. Procédé selon la revendication 1 ou 2, dans lequel l'angle α se situe entre 40° et 50°, de préférence α = 45°, et/ou
dans lequel l'angle β se situe entre 40° et 50°, de préférence β = 45°, et/ou
dans lequel l'angle α est égal à l'angle β, de préférence α = β = 45°, et/ou
dans lequel l'angle γ > 45° et de préférence γ = 90°, et/ou
dans lequel, entre les deux étapes d'usinage, l'élément optique (O) et/ou le laser, donc sa direction de polarisation (P), et/ou la direction de déplacement (V) du laser subissent un pivotement visant à produire les angles α, β, γ prédéfinis.

4. Procédé selon l'une des revendications précédentes,
dans lequel les structures périodiques de surface induites par laser (LIPSS) présentent une constante de réseau Λ ≤ 800 nm, et/ou dans lequel les deux étapes d'usinage permettent de former des structures de dispersion (S) de type nervurées ou à dômes sur la surface de l'optique de dispersion (SO), lesquelles présentent une constante de réseau qui demeure inchangée ou qui varie, et/ou
dans lequel, dans le cas de structures de dispersion (S) à dômes, les structures périodiques de surface induites par laser (LIPSS) vont sensiblement ou sont sensiblement orientées, pour chaque dôme (K), du creux (T) du dôme (K) jusqu'au sommet (Z) du dôme (K).

5. Procédé selon l'une des revendications précédentes, dans lequel le laser parcourt plusieurs fois l'élément optique (O) par direction de déplacement (V), avec un décalage parallèle (A) entre les déplacements respectifs, afin de former la structure de dispersion (S) sur une zone définie, de préférence sur toute la surface de l'élément optique (O),
ledit décalage parallèle (A) correspondant de préférence à une valeur allant de la moitié à la totalité du diamètre de focalisation du laser, et/ou
dans lequel la vitesse de déplacement du laser au cours des étapes d'usinage, notamment des déplacements de préférence linéaires, va de 500 à 1500 mm/s.

6. Procédé selon l'une des revendications précédentes, dans lequel le laser présente un diamètre de faisceau de 10 à 20 µm, et/ou dans lequel la polarisation du laser, c.-à-d. de son faisceau, est linéaire.
